(19) Europäisches Patentamt

European Patent Office

Office européen des brevets

(11) EP 1 006 081 A1

(12) EUROPEAN PATENT APPLICATION

(43) Date of publication:
07.06.2000 Bulletin 2000/23

(51) Int. Cl.$^{7}$: C01G 25/00, B01J 23/10, B01D 53/86

(21) Application number: 99123795.9

(22) Date of filing: 01.12.1999

(84) Designated Contracting States:
AT BE CH CY DE DK ES FI FR GB GR IE IT LI LU MC NL PT SE
Designated Extension States:
AL LT LV MK RO SI

(30) Priority: 02.12.1998 JP 34243798

(71) Applicant:
Daihatsu Motor Co., Ltd.
Ikeda-shi, Osaka (JP)

(72) Inventors:
• Yamamoto, Mari
  Ikeda-shi, Osaka (JP)
• Tanaka, Hirohisa
  Ikeda-shi, Osaka (JP)
• Yamada, Koji
  Ikeda-shi, Osaka (JP)

(74) Representative:
Schumacher, Horst, Dr. Dipl.-Phys. et al
König-Palgen-Schumacher-Kluin
Patentanwälte
Frühlingstrasse 43A
45133 Essen (DE)

(54) **Catalytic converter for automotive pollution control, and oxygen-storing cerium complex oxide used therefor**

(57) A catalytic converter for cleaning exhaust gas includes a heat-resistant support, and a coating formed on the support. The coating contains at least one kind of catalytically active substance and at least one kind of oxygen-storing cerium complex oxide. The cerium complex oxide is represented by the following formula;

$$Ce_{1-(a+b)}Zr_aY_bO_{2-b/2}$$

wherein $0.06 \leqq b/a \leqq 0.27$ is satisfied in said formula.

FIG.1

EP 1 006 081 A1

**Description**

BACKGROUND OF THE INVENTION

1. Field of the Invention:

The present invention relates to a catalytic converter for effectively cleaning the exhaust gas of an automotive internal combustion engine by removal of nitrogen oxide ($NO_X$), carbon monoxide (CO) and hydrocarbons (HC). The present invention also relates to an oxygen-storing cerium complex oxide which may be advantageously used for such a catalytic converter.

2. Description of the Related Art:

As is well known, the exhaust gas of an automotive internal combustion engine inevitably contains harmful substances such as $NO_x$, CO and HC. In recent years, particularly, the restrictions on exhaust gas cleaning are increasingly strict for environmental protection.

A so-called three-way catalytic converter has been most widely used for removing the above-described harmful substances. Typically, a three-way catalytic converter includes a honeycomb support made of a heat-resistant material such as cordierite, and a wash-coat formed on the surfaces of the respective cells of the honeycomb support. The wash-coat contains a heat-resistant inorganic oxide such as $Al_2O_3$, a catalytically active substance such as Pt, Pd and/or Rh, and an oxygen-storing oxide such as $CeO_2$ (cerium oxide). The catalytically active substance reduces $NO_X$ to $N_2$ while oxidizing CO and HC to $CO_2$ and $H_2O$, respectively.

The oxygen-storing oxide, typically $CeO_2$, has an oxygen storage capacity (hereafter abbreviated as "OSC"); that is, the capacity to occlude gaseous oxygen and to release the occluded oxygen. More specifically, $CeO_2$ is added for adjusting the oxygen concentration of gaseous atmosphere, so that excess oxygen in the gaseous atmosphere is occluded into the crystalline structure of $CeO_2$ in an oxygen-rich state (i.e., fuel-lean state which may be simply referred to as "lean state") for assisting the catalytic converter in reducing $NO_x$ to $N_2$ while releasing the occluded oxygen into the gaseous atmosphere in a CO- and/or HC-rich state (i.e., fuel-rich state which may be simply referred to as "rich state") for assisting the catalytic converter in oxidizing CO and HC to $CO_2$ and $H_2O$. Thus, the catalytic activity of the catalytically active substance is enhanced by the addition of $CeO_2$.

However, it has been found that grains or particles of $CeO_2$ grows due to sintering at high temperature. Such growth of $CeO_2$ results in a decrease of surface area, consequently causing gradual loss of OSC. Particularly, if the catalytic converter is mounted near the engine, it may be frequently subjected to an extremely high temperature of no less than 900 °C (or sometimes even higher than 1,000 °C), which prompts the grain growth of $CeO_2$.

In view of the above problem, various studies have been made to improve the thermal stability of $CeO_2$ by complexing it with $ZrO_2$ (zirconium oxide) for example. Further, since the Ce-Zr complex oxide is metastable and therefore decomposable under high-temperature aging, attempts have been made to add Y (yttrium) to such a complex oxide for further improving the thermal stability of the complex oxide. However, no research has ever been made as to the relationship between the Y/Zr ratio and the thermal stability of the Ce-Zr-Y complex oxide.

DISCLOSURE OF THE INVENTION

Surprisingly, we have found that the Y/Zr ratio in a Ce-Zr-Y complex oxide is critically important in determining the thermal stability of the complex oxide and therefore has critical significance in prolonging the service life of the complex oxide (i.e., the service life of a catalytic converter incorporating such a complex oxide) at high temperature.

It is, therefore, an object of the present invention to provide a catalytic converter for cleaning exhaust gas which is capable of retaining a high catalytic activity for a long time even under severe operating conditions above 900 °C.

Another object of the present invention is to provide an oxygen-storing cerium complex oxide which can be advantageously incorporated in a catalytic converter.

According to one aspect of the present invention, a catalytic converter for cleaning exhaust gas comprises a heat-resistant support, and a coating formed on the support, the coating including at least one kind of catalytically active substance and an oxygen-storing cerium complex oxide. The oxygen-storing cerium complex oxide is represented by the following formula;

$$Ce_{1-(a+b)}Zr_aY_bO_{2-b/2}$$

characterized that $0.06 \leqq b/a \leqq 0.27$ is satisfied in the formula.

As previously described, the thermal stability of $CeO_2$ (namely, the thermal stability of the catalytic converter as a whole) is improved when complexed with Zr and Y, but such stability improvement is particularly remarkable only when the Y/Zr ratio (namely, b/a in the above formula) is set in the above-mentioned range. In other words, the thermal stability of $CeO_2$ is critically improved only when the b/a ratio is optimized. If the b/a ratio is smaller than 0.06, the proportion b of Y becomes too low, thereby failing to sufficiently improve the thermal stability of the cerium complex oxide. Similarly, a b/a ratio higher than 0.27 also results in a decrease of the thermal stability of the cerium complex oxide.

Preferably, the b/a ratio should satisfy $0.11 \leqq b/a \leqq 0.18$, as experimentally demonstrated hereinafter.

The proportion of Ce in the cerium complex oxide is significant for obtaining a suitable oxygen storage function which is inherently intended for the cerium complex oxide. If the proportion of Ce is too low, the cerium complex oxide fails to provide a sufficient oxygen storage function. However, if the proportion of Ce is too high, the proportions of Zr and Y become too low, consequently failing to sufficiently enhance the high-temperature stability or durability of the cerium complex oxide. For these reasons, the proportion of Ce should be preferably set to satisfy $0.3 \leqq 1-(a+b) \leqq 0.7$, particularly $0.4 \leqq 1-(a+b) \leqq 0.6$, in the above formula.

Preferably, the Ce atoms of the oxygen-storing cerium complex oxide may be partially substituted by Zr atoms and/or Y atoms in solid solution.

Typically, the catalytically active substance contained in the coating may be a precious metal such as Ru, Rh, Pd, Ag, Os, Ir, Pt and Au. Preferably, however, the catalytically active substance may be selected from a group consisting of Pt, Rh and Pd. Each of these active substances may be used alone or in combination with another.

The coating may further contain at least one heat-resistant inorganic oxide selected from a group consisting of alumina, silica, titania, magnesia and zirconia. Particularly useful is activated alumina.

The heat-resistant support, which may be made of cordierite, mullite, $\alpha$-alumina or a metal (e.g. stainless steel), should preferably have a honeycomb structure.

The oxygen-storing cerium complex oxide having the above formula may be prepared by using known techniques such as coprecipitation process or alkoxide process.

The coprecipitation process includes the steps of preparing a mixture solution which contains respective salts of Ce, Zr and Y in a predetermined stoichiometric ratio, then adding an aqueous alkaline solution or an organic acid to the salt solution for causing the respective salts to coprecipitate, and thereafter heat-treating the resulting coprecipitate for oxidization to provide a target complex oxide.

Examples of Ce or Y salts include sulfates, nitrates, hydrochlorides, phosphates, acetates and oxalates. Examples of Zr salts include oxychloride, oxynitrate, oxysulfate and zirconium oxyacetate. Examples of aqueous alkaline solutions include an aqueous solution of sodium carbonate, aqueous ammonia and an aqueous solution of ammonium carbonate. Examples of organic acids include oxalic acid and citric acid.

The heat treatment in the coprecipitation process includes a heat-drying step for drying the coprecipitate at about 50~200 °C for about 1~48 hours after filtration, and a baking step for baking the coprecipitate at about 350~1,000 °C (preferably about 400~700 °C) for about 1~12 hours. During the baking step, the baking conditions (the baking temperature and the baking period) should be selected depending on the composition of the oxygen-storing cerium complex oxide so that at least part of the complex oxide is in the form of solid solution.

The alkoxide process includes the steps of preparing an alkoxide mixture solution which contains Ce, Zr and Y in a predetermined stoichiometric ratio, then adding a deionized water to the alkoxide mixture solution for causing Ce, Zr and Y to hydrolyze, and thereafter heat-treating the resulting hydrolysate to provide a target complex oxide.

Examples of alkoxides usable for preparing the alkoxide mixture solution include respective methoxides, ethoxides, propoxides and butoxides of Ce, Zr and Y. Instead, ethylene oxide addition salts of each of these elements are also usable.

The heat treatment in the alkoxide process may be performed in the same way as that in the coprecipitation process.

A precious metal such as Pt, Rh or Pd as the catalytically active substance may be supported on the oxygen-storing cerium complex oxide by using known techniques. For instance, a solution containing a respective salt (e.g. 1-20 wt%) of Pt (and/or Rh and/or Pd) is first prepared, the cerium complex oxide is then impregnated with the salt-containing solution, and thereafter the complex oxide is heat-treated. Examples of salts usable for this purpose include nitrate, dinitro diammine nitrate, and chloride. The heat-treatment, which is performed after impregnation and filtration, may include drying the complex oxide by heating at about 50~200 °C for about 1~48 hours and thereafter baking the complex oxide at about 350~1,000 °C for about 1~12 hours.

Alternatively, a precious metal may be supported on the oxygen-storing cerium complex oxide at the time of performing the coprecipitation process or the alkoxide process by adding a salt solution of the precious metal to the mixture salt solution or the alkoxide mixture solution.

According to a second aspect of the present invention, an oxygen-storing cerium complex oxide is provided which is represented by the following formula;

$$Ce_{1-(a+b)}Zr_aY_bO_{2-b/2}$$

characterized that $0.06 \leqq b/a \leqq 0.27$ is satisfied in said formula.

Again, it is preferable if the cerium complex oxide meets $0.11 \leqq b/a \leqq 0.18$ in the above formula.

Advantageously, the proportion of Ce in the complex oxide should meet $0.3 \leqq 1-(a+b) \leqq 0.7$, particularly $0.4 \leqq 1-(a+b) \leqq 0.6$, in the above formula.

Further, it is preferable that the Ce atoms of the oxygen-storing cerium complex oxide be partially substituted by Zr atoms and/or Y atoms in solid solution.

Other features and advantages of the present invention will be apparent from the following detailed description of the preferred embodiments given with reference to the accompanying drawings.

BRIEF DESCRIPTION OF THE DRAWINGS

In the accompanying drawings:

Fig. 1 is a graph showing the relationship between the OSC of oxygen-storing cerium complex oxide and the Y/Zr ratio; and
Fig. 2 is a graph showing the relationship between the OSC of oxygen-storing cerium complex oxide and the Ce portion.

DETAILED DESCRIPTION OF THE PREFERRED EMBODIMENTS

Next, various examples of the present invention will be described together with comparative examples. However, it should be appreciated that the present invention is in no way limited by these examples.

[Examples 1~8 and Comparisons 1~3]

Various oxygen-storing cerium complex oxides each having the composition shown in Table 1 below were prepared and evaluated for their respective OSC (oxygen storage capacity) after aging in a high-temperature atmosphere of 1,000 °C for 5 hours, 50 hours and 500 hours, respectively. The specific ways of preparing the cerium complex oxide and determining the OSC are described hereinafter.

TABLE 1

|  | Y/Zr (Molar Ratio) | Composition (Molar Ratio) | | |
|---|---|---|---|---|
|  |  | Ce | Zr | Y |
| Example 1 | 0.06 | 0.52 | 0.45 | 0.03 |
| Example 2 | 0.09 | 0.50 | 0.46 | 0.04 |
| Example 3 | 0.11 | 0.49 | 0.46 | 0.05 |
| Example 4 | 0.14 | 0.59 | 0.36 | 0.05 |
| Example 5 | 0.16 | 0.49 | 0.44 | 0.07 |
| Example 6 | 0.18 | 0.55 | 0.38 | 0.07 |
| Example 7 | 0.20 | 0.64 | 0.30 | 0.06 |
| Example 8 | 0.27 | 0.58 | 0.33 | 0.09 |
| Comparison 1 | 0 | 0.53 | 0.47 | 0 |
| Comparison 2 | 0.04 | 0.51 | 0.47 | 0.02 |
| Comparison 3 | 0.40 | 0.58 | 0.30 | 0.12 |
| Note: Each of the cerium complex oxides in the Examples and the Comparisons was made to support 2 parts by weight of Pt relative to 100 parts by weight of the oxide, as described below. | | | | |

(Preparation of Complex Oxides)

The oxygen-storing cerium complex oxide of Example 1, which had a composition represented as $Ce_{0.52}Zr_{0.45}Y_{0.03}O_2$, was prepared by the so-called alkoxide process. Specifically, an alkoxide mixture solution was first prepared by dissolving, in 200 cm$^3$ of toluene, 30.1 g (0.0834 mol) of cerium butoxide, 29.4 g (0.0765 mol) of zirconium butoxide and 1.5 g (0.0051 mol) of yttrium butoxide. Then, the alkoxide mixture solution was gradually dripped into 600 cm$^3$ of deionized water in about 10 minutes for causing hydrolysis of the butoxide mixture. Then, the toluene and water content of the butoxide mixture solution was removed by vaporization. Then, the remaining hydrolysate (precursor) was dried at 60 °C for 24 hours and thereafter baked in an electric oven at 450 °C for 3 hours, thereby providing powder of the target Ce-Zr-Y complex oxide.

Further, the cerium complex oxide powder was impregnated with an aqueous solution of dinitro diammineplatinum nitrate. The thus impregnated powder was first dried at 60 °C for 24 hours and then baked at 600 °C for 3 hours. As a result, the cerium complex oxide was made to support 2 parts by weight of Pt relative to 100 parts by weight of the complex oxide.

Each of the cerium complex oxides in the other Examples and in the Comparisons was prepared in the same manner as above except that the composition of the complex oxide was different.

(Determination of OSC)

The OSC of each cerium complex oxide was determined in the following manner after aging in a high-temperature atmosphere of 1,000 °C for 5 hours, 50 hours and 500 hours, respectively. First, the cerium complex oxide was placed in an $O_2$-rich oxidizing atmosphere (containing 50 vol.% of oxygen and 50 vol.% of nitrogen) for 40 minutes for causing occlusion of oxygen and then weighed. Then, the complex oxide thus loaded with oxygen was placed in an inert atmosphere (containing 100 vol.% of nitrogen) for 3 minutes. Thereafter, the complex oxide was put in an $H_2$-rich reducing atmosphere (containing 20 vol.% of hydrogen and 80 vol.% of nitrogen) for 7 minutes for causing release of oxygen and then weighed. The OSC of the oxygen-storing oxide was calculated by subtracting the weight of the $O_2$-released oxide from the weight of the $O_2$-occluded oxide and by converting the obtained oxygen weight to a molar value per mol of the complex oxide. The respective composition of the oxidizing atmosphere, the inert atmosphere and the reducing atmosphere used here is listed in Table 2 below. During this test, each of the three different atmospheres was supplied at a flow rate of 3 dm$^3$/hr and maintained at a temperature of 500 °C.

TABLE 2

| Components | Oxidizing | Inert | Reducing |
|:---:|:---:|:---:|:---:|
| $H_2$ | - | - | 20 vol% |
| $O_2$ | 50 vol% | - | - |
| $N_2$ | 50 vol% | 100vol% | 80 vol% |

(Results and Evaluation)

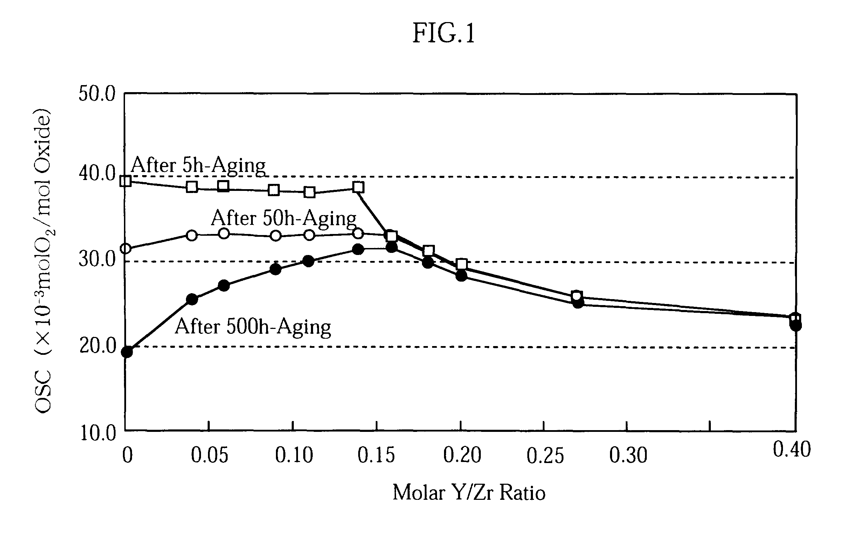

The results of the OSC determination are shown in Fig. 1. From the graph of Fig. 1, it is observed that the cerium complex oxide exhibits a high OSC even after the 500-hour high-temperature aging when the Y/Zr ratio is set in the range of $0.06 \leqq Y/Zr \leqq 0.27$ . Further, it is also observed that this advantage (maintenance of high OSC) is particularly remarkable when the Y/Zr ratio is set in the range of $0.11 \leqq Y/Zr \leqq 0.18$ .

[Examples 9~13 and Comparisons 4~7]

In Examples 9~13 and Comparisons 4~7, various oxygen-storing cerium complex oxides each having the composition shown in Table 3 below were prepared and evaluated for their respective OSC (oxygen storage capacity) after aging in a high-temperature atmosphere of 1,000 °C for 500 hours. Specifically, in these Examples and Comparisons, the Y/Zr ratio was kept at a constant value while the Ce proportion was varied. The preparation of each cerium complex oxide and the determination of its OSC were performed in the same way as in Example 1.

TABLE 3

| | Y/Zr (Molar Ratio) | Composition (Molar Ratio) | | |
| --- | --- | --- | --- | --- |
| | | Ce | Zr | Y |
| Example 9 | 0.15 | 0.30 | 0.609 | 0.091 |
| Example 10 | 0.15 | 0.40 | 0.522 | 0.078 |
| Example 11 | 0.15 | 0.50 | 0.435 | 0.065 |
| Example 12 | 0.15 | 0.60 | 0.348 | 0.052 |
| Example 13 | 0.15 | 0.70 | 0.261 | 0.039 |
| Comparison 4 | 0.15 | 0.10 | 0.783 | 0.117 |
| Comparison 5 | 0.15 | 0.20 | 0.696 | 0.104 |
| Comparison 6 | 0.15 | 0.80 | 0.174 | 0.026 |
| Comparison 7 | 0.15 | 0.90 | 0.087 | 0.013 |
| Note: Each of the cerium complex oxides in the Examples and the Comparisons was made to support 2 parts by weight of Pt relative to 100 parts by weight of the oxide, as described below. | | | | |

(Results and Evaluation)

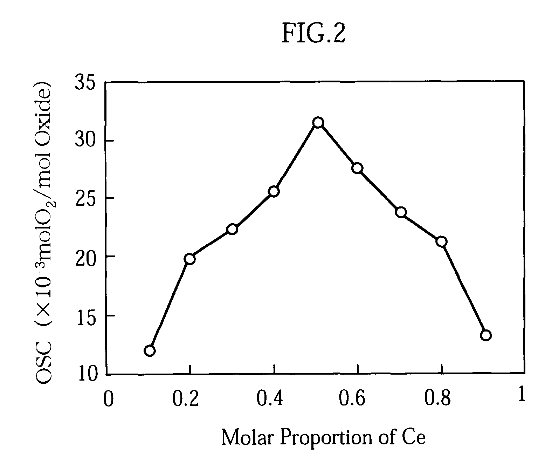

The results of the OSC determination are shown in Fig. 2. From the graph of Fig. 2, it is observed that when the Y/Zr ratio is set at an optimum value of 0.15, the cerium complex oxide exhibits a high OSC even after the 500-hour high-temperature aging if the Ce portion lies in a range of $0.3 \leqq Ce \leqq 0.7$. Further, it is also observed that this advantage (maintenance of high OSC) is particularly remarkable when the Ce portion is set in a range of $0.4 \leqq Ce \leqq 0.6$.

**Claims**

1.  A catalytic converter for cleaning exhaust gas comprising:

    a heat-resistant support; and
    a coating formed on the support, the coating including at least one kind of catalytically active substance and an oxygen-storing cerium complex oxide;
    wherein the oxygen-storing cerium complex oxide is represented by the following formula;

$$Ce_{1-(a+b)}Zr_aY_bO_{2-b/2}$$

    characterized that $0.06 \leqq b/a \leqq 0.27$ is satisfied in said formula.

2.  The catalytic converter according to claim 1, wherein $0.11 \leqq b/a \leqq 0.18$ is satisfied in said formula.

3.  The catalytic converter according to claim 1 or 2, wherein $0.3 \leqq 1-(a+b) \leqq 0.7$ is satisfied in said formula.

4.  The catalytic converter according to claim 3, wherein $0.4 \leqq 1-(a+b) \leqq 0.6$ is satisfied in said formula.

5.  The catalytic converter according to any one of claims 1 to 4, wherein the Ce atoms of the oxygen-storing cerium complex oxide are partially substituted by Zr atoms and/or Y atoms in solid solution.

6.  The catalytic converter according to any one of claims 1 to 5, wherein the catalytically active substance is selected from a group consisting of Pt, Rh and Pd.

7.  An oxygen-storing cerium complex oxide which is represented by the following formula;

$$Ce_{1-(a+b)}Zr_aY_bO_{2-b/2}$$

characterized that $0.06 \leqq b/a \leqq 0.27$ is satisfied in said formula.

8. The cerium complex oxide according to claim 7, wherein $0.11 \leqq b/a \leqq 0.18$ is satisfied in said formula.

9. The cerium complex oxide according to claim 7 or 8, wherein $0.3 \leqq 1-(a+b) \leqq 0.7$ is satisfied in said formula.

10. The cerium complex oxide according to claim 9, wherein $0.4 \leqq 1-(a+b) \leqq 0.6$ is satisfied in said formula.

11. The cerium complex oxide according to any one of claims 7 to 10, wherein the Ce atoms of the oxygen-storing cerium complex oxide are partially substituted by Zr atoms and/or Y atoms in solid solution.

FIG.1

FIG.2

EP 1 006 081 A1

European Patent Office

**EUROPEAN SEARCH REPORT**

Application Number

EP 99 12 3795

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 605 274 A (RHONE POULENC CHIMIE) 6 July 1994 (1994-07-06) * the whole document * | 1-11 | C01G25/00 B01J23/10 B01D53/86 |
| Y | DE 198 05 259 A (DAIHATSU MOTOR CO LTD) 13 August 1998 (1998-08-13) * the whole document * | 1-11 | |
| Y | FR 2 757 425 A (RHONE POULENC CHIMIE) 26 June 1998 (1998-06-26) * the whole document * | 1-11 | |
| Y | FR 2 748 740 A (RHONE POULENC CHIMIE) 21 November 1997 (1997-11-21) * the whole document * | 1-11 | |
| | | | TECHNICAL FIELDS SEARCHED (Int.Cl.7) |
| | | | C01G B01J B01D |

The present search report has been drawn up for all claims

| Place of search | Date of completion of the search | Examiner |
|---|---|---|
| THE HAGUE | 7 March 2000 | LIBBERECHT, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 99 12 3795

This annex lists the patent family members relating to the patent documents cited in the above–mentioned European search report.
The members are as contained in the European Patent Office EDP file on
The European Patent Office is in no way liable for these particulars which are merely given for the purpose of information.

07-03-2000

| Patent document cited in search report | | Publication date | Patent family member(s) | | Publication date |
|---|---|---|---|---|---|
| EP 0605274 | A | 06-07-1994 | FR 2699524 A | | 24-06-1994 |
| | | | AT 179680 T | | 15-05-1999 |
| | | | AU 668236 B | | 26-04-1996 |
| | | | AU 5234793 A | | 30-06-1994 |
| | | | BR 9305146 A | | 01-11-1994 |
| | | | CA 2111892 A | | 22-06-1994 |
| | | | DE 69324785 D | | 10-06-1999 |
| | | | DE 69324785 T | | 02-12-1999 |
| | | | DE 605274 T | | 26-03-1998 |
| | | | ES 2133372 T | | 16-09-1999 |
| | | | FI 935748 A | | 22-06-1994 |
| | | | JP 2947449 B | | 13-09-1999 |
| | | | JP 6226094 A | | 16-08-1994 |
| | | | US 5693299 A | | 02-12-1997 |
| | | | US 5712218 A | | 27-01-1998 |
| | | | ZA 9309353 A | | 16-09-1994 |
| DE 19805259 | A | 13-08-1998 | JP 10216509 A | | 18-08-1998 |
| FR 2757425 | A | 26-06-1998 | EP 0946266 A | | 06-10-1999 |
| | | | WO 9828063 A | | 02-07-1998 |
| | | | NO 993106 A | | 19-08-1999 |
| | | | ZA 9711502 A | | 14-07-1998 |
| FR 2748740 | A | 21-11-1997 | AU 2965897 A | | 05-12-1997 |
| | | | BR 9709236 A | | 10-08-1999 |
| | | | CA 2255571 A | | 20-11-1997 |
| | | | EP 0906244 A | | 07-04-1999 |
| | | | WO 9743214 A | | 20-11-1997 |
| | | | NO 985313 A | | 15-01-1999 |